# EUROPÄISCHE PATENTSCHRIFT

(11) **EP 2 730 722 B1**
(45) Veröffentlichungstag und Bekanntmachung des Hinweises auf die Patenterteilung: **28.09.2016**
(21) Anmeldenummer: 13191508.4
(22) Anmeldetag: 05.11.2013
(51) Int. Cl.: A01K 63/00, E04H 4/00

(54) **Becken in Modulbauweise**
Modular basin
Réservoir à structure modulaire

(30) Priorität: 08.11.2012 DE 102012021795
(43) Veröffentlichungstag der Anmeldung: 14.05.2014
(73) Patentinhaber: Benno Drössler GmbH & Co, Bauunternehmung KG, 57080 Siegen (DE)
(72) Erfinder: Drößler, Thomas, 57074 Siegen (DE); Drößler, Christian, 57072 Siegen (DE)
(74) Vertreter: Grosse, Wolf-Dietrich Rüdiger

(56) Entgegenhaltungen:
- EP-A2- 1 895 076
- FR-A3- 2 439 856
- JP-A- H08 284 450

## Beschreibung

### Becken in Modulbauweise

Die Erfindung betrifft ein flüssigkeitsdichtes, frei stehbares Becken in Modulbauweise, vorzugsweise Fischzuchtbecken, bestehend aus mehreren aus Beton erstellten Segmenten, die mittels Klebverbindungen aneinander befestigt sind. Derartige Becken werden als Fischzuchtbecken in Aquakulturanlagen zur Aufzucht von Fischen eingesetzt.

In der DE 2 258 723 A1 sind universale Montage-Bauelemente, bestehend aus Ebenen- und Winkelprofilen sowie einem Segment- und einem Viertelkreisprofil in Sandwich-Bauweise bekannt. Die Sandwich-Konstruktion besitzt eine äußere und eine innere Oberflächenschicht und einen mit Isolationsmaterial ausgefüllten Zwischenraum. Der Baustoff für die Oberflächenschicht kann verstärkter Polyester oder ein Duroplast, aber auch Stahl- oder Aluminiumblech sein.

In der DE 76 08 815 U1 ist ein Schwimmbecken beschrieben, das zweiteilig ausgebildet und aus Stahlbetonfertigteilen zusammengesetzt ist. Die Elemente werden mittels einer aufwändigen flüssigkeitsdichten Verbindungseinrichtung lösbar aneinander befestigt.

Die DE 79 30 433 U1 beschreibt ein Schwimmbassin, bei dem vorgefertigte Betonteile durch Spannelemente zur Abdichtung der Betonteile zusammengehalten werden.

Die JP H08 284440 A offenbart ein Becken aus Beton in Modulbauweise bei dem die einzelnen Module über Schraubverbindungen zusammengefügt werden.

Die DE 10 2006 007 109 A1 offenbart einen Multifunktionsbehälter aus einzelnen faserverstärkten Betonelementen, die mit Spezialkleber zu kompletten Funktionseinheiten frei wählbarer Form miteinander verbunden werden. Die Dichtigkeit und Stabilität erhöhende Maßnahmen sind nicht offenbart.

Die DE 10 2006 020 188 A1 offenbart ein Behältersystem für Behälter zur Aufnahme fermentierbarer oder aggressiver Stoffe mit einer Bodenplatte und einer Behälterseitenwand, die aus einer Vielzahl baugleicher vorgefertigter Plattensegmente aus einem Polymerbeton besteht, die stoffschlüssig verklebt werden. Stützpfeiler, Längsrippen und Spannschlösser können in Abhängigkeit der statischen Belastung vorgesehen sein.

Aus der EP 1 895 076 A2 sind Großbecken aus Beton bekannt, die aus Beckensegmenten bestehen, die durch Zugstäbe zusammengehalten werden. Die Deckel für das Becken können mit den Seitenwänden beispielsweise durch Klebung fest verbunden sein.

Die FR 2 776 321 A1 offenbart einen nicht frei stehbaren Pool aus einzelnen Segmenten, die anstelle einer untereinander Verklebung mittels in Ausnehmungen angeordneten Filzdichtungen abgedichtet sind.

FR 2 439 856 A3 zeigt ein Becken in Modulbauweise mit mehreren aus Beton erstellten Segmenten.

Weiterhin sind allgemein Fischzuchtbecken aus Beton bekannt, bei denen, um die Rauigkeit der Oberfläche der Betonbecken zu verringern, und eine Dichtigkeit herzustellen, die Oberfläche mit Kunststoff, beispielsweise durch Folien oder einer Beschichtung, abgedeckt wird. Die Kunststoffabdeckung wird eingesetzt da bislang Fischzuchtbecken aus Beton als kritisch im Hinblick auf das Eindringen von Wasser in die Beckenoberflächen und auf Korrosionsprobleme insbesondere bei Seewasser sowie auf das Auslaugen von Zusatzstoffen, die dem Fisch und/oder dem Endverbraucher schädlich sein könnten, angesehen werden.

All diese Lösungen sind aufwändig in Herstellung, Lagerung, Transport und Montage und dadurch teuer.

Die Erfindung geht von der Aufgabe aus, ein Becken der eingangs genannten Art derart auszubilden, dass es sich durch einfache, universelle und leicht zu transportierende Grundelemente mit vielen Kombinationsmöglichkeiten bezüglich Größe und Form bei geringen Material- und Herstellungskosten auszeichnet.

Die Aufgabe wird erfindungsgemäß für ein Becken der eingangs genannten Art durch die im Patentanspruch 1 angegebenen Merkmale gelöst. Vorteilhafte Ausbildungen sind in den abhängigen Patentansprüchen angegeben.

Die Aufgabe wird erfindungsgemäß dadurch gelöst, dass das Becken Eck-Segmente aufweist, die jeweils einen Boden und mindestens zwei, eine Winkel zwischen sich einschließende Seitenwände umfassen, die an den die Segmente verbindenden Rändern mit Klebeflächen aufweisende Aussparungen versehen sind, in die Klebelaschen eingelegt sind, wobei die Eck-Segmente an den diese miteinander verbindenden Rändern Klebeflächen aufweisen, und zudem im Bereich dieser Ränder mit Aussparungen versehen sind, in die Klebelaschen eingelegt und mit den benachbarten Eck-Segmenten verklebt sind. Diese Segmente lassen sich einfach transportieren sowie sicher und dauerhaft verbinden, so dass sich die Montage vor Ort erheblich vereinfacht.

Die Größe des Beckens sowohl in der Länge als auch gegebenenfalls in der Breite lässt sich auf einfache Weise variieren, wenn zwischen den Eck-Segmenten U-Segmente und/oder L-Segmente angeordnet sind. Dadurch lassen sich einige komplexe 3-D-Formen als universelle Grundelemente herstellen und miteinander kombinieren.

Es hat sich als vorteilhaft erwiesen, wenn die Segmente aus Hochleistungsbeton oder ultrahochfestem Beton ggf. mit Faserbewehrung erstellt sind, da derartiger Beton zum einen mit einer sehr glatten Oberfläche herstellbar und zum anderen sehr dicht und widerstandsfähig ist, so dass beispielsweise Schutzbeschichtungen wie beim Stand der Technik nicht erforderlich sind.

In vorteilhafter Weise können die Segmente dünnwandig in Stärken ab 30 mm ausgebildet sein.

Erfindungsgemäß kann der Grundriss des Beckens polygonal, vorzugsweise oktogonal ausgebildet sein.

Es hat sich als vorteilhaft erwiesen, wenn die Seitenwände zumindest bereichsweise höher als die restlichen Seitenwände ausgebildet sind, wenn sich ein zweites, oberes Becken auf den höheren Seitenwänden des unteren Beckens abstützt, und wenn mindestens eine der höheren Seitenwände mit einer fensterartigen Öffnung als Durch- oder/oder Zugriff zu dem unteren Becken versehen ist.

Das zweite, obere Becken kann sicher gehalten werden, wenn die Seitenwände Stützen für die Segmente haltenden Träger aufweisen.

Die Klebelaschen lassen sich einsparen, wenn die Träger so ausgebildet sind, dass sie die Klebelaschen ersetzen.

Der Zusammenbau vor Ort vereinfacht sich, wenn die Aussparungen zur Aufnahme der Klebelaschen z.B. für ein unteres Becken auf der Innenfläche der Segmente und für ein oberes Becken auf der Innen- und/oder Außenfläche angeordnet sind.

Die Klebwirkung lässt sich erhöhen, wenn die Klebeflächen in den Aussparungen und/oder die Klebeflächen der Klebelaschen durch spezielle Verfahren bereits in der Schalung für ein Aufrauen vorbehandelt sind.

Die Erfindung ist nachfolgend anhand von in der Zeichnung dargestellten Ausführungsbeispielen näher erläutert. Es zeigen:
- Figur 1: Einen perspektivisch dargestellten Aufbau eines erfindungsgemäßen Becken, hier eines Fischzuchtbeckens bestehend aus vier Ecksegmenten,
- Figur 2: einen Aufbau eines Fischzuchtbecken bestehend aus vier Ecksegmenten gemäß Figur 1, verlängert mit zwei U-Segmenten,
- Figur 3: eine perspektivische Draufsicht auf die Elemente des Fischzuchtbeckens mit Klebelaschen,
- Figur 4: eine Klebeverbindung im Detail mit eingesetzter Klebelasche,
- Figur 5: die Klebeverbindung gemäß Figur 4 im Detail mit einzusetzender Klebelasche,
- Figur 6: einen perspektivisch dargestellten Aufbau eines erfindungsgemäßen Fischzuchtbecken mit variabler Breite und
- Figur 7: zwei in zwei Etagen übereinander angeordnete Fischzuchtbecken.

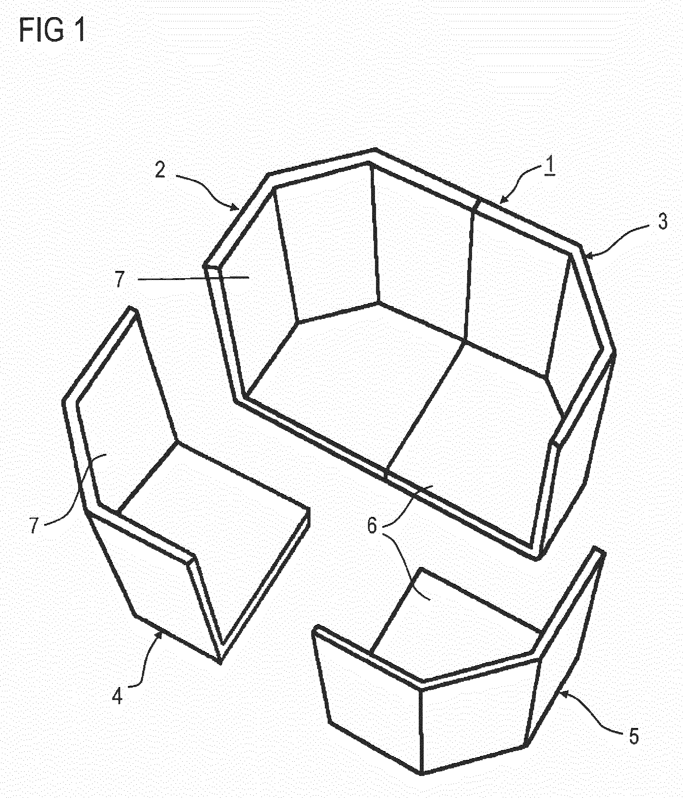

In der Figur 1 ist die einfachste Form eines erfindungsgemäßen Beckens 1, hier eines Fischzuchtbeckens dargestellt, das aus vier Ecksegmenten 2 bis 5 als Grundmodule besteht. Die 3-dimensional ausgebildeten Ecksegmente 2 bis 5 weisen Böden 6 und jeweils drei Seitenwände 7 auf. Die dünnwandigen Ecksegmente 2 bis 5 sind aus Beton, beispielsweise Hochleistungsbeton oder ultrahochfestem Beton (UHFB - engl. UHPC - Ultra High Performance Concrete), in einem Stück gefertigt, um den Fugenanteil zu minimieren. Sie können zu einem Becken 1 hier einem Fischzuchtbecken mit oktogonalem Querschnitt zusammengefügt werden.

Durch die Verwendung von sehr dichtem, widerstandsfähigem und selbstverdichtendem Hochleistungsbeton oder ultrahochfestem Beton mit hoher Druck- und Biegezugfestigkeit sind diese erfindungsgemäß sehr dünnwandigen und komplexen 3-D-Formen mit sehr glatten Oberflächen möglich.

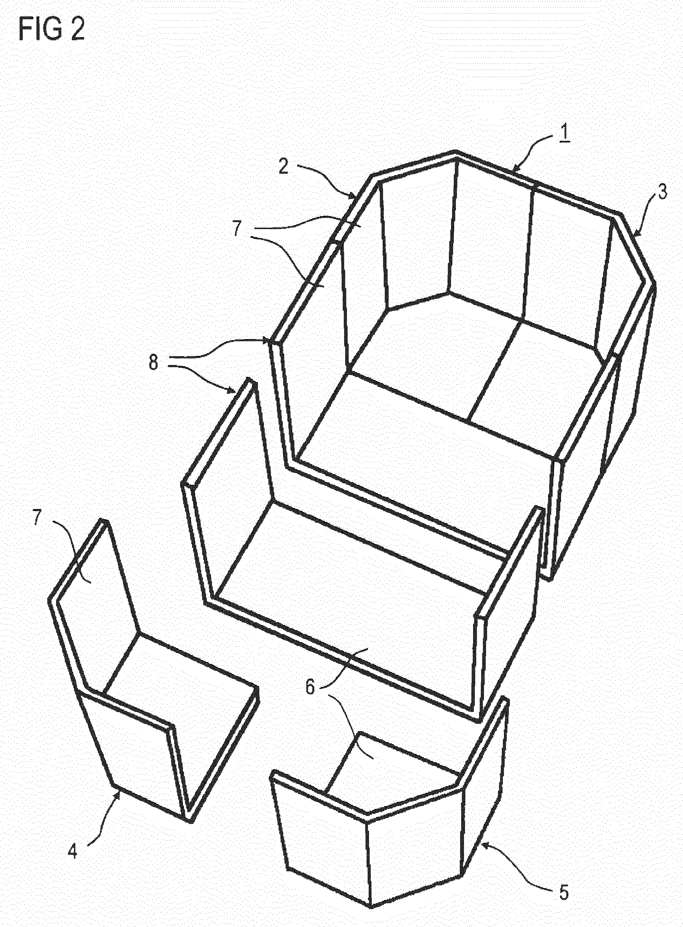

Bei dem in Figur 2 dargestellten Beispiel sind zwischen jeweils zwei der vier Ecksegmente 2 bis 5 zwei U-Segmente 8 als Verlängerungselemente angeordnet, so dass sich ein gestrecktes Becken 1 hier Fischzuchtbecken mit oktogonalem Querschnitt ergibt, dessen Länge durch die Anzahl der Zwischenelemente, den U-Segmenten 8, sehr variabel ist.

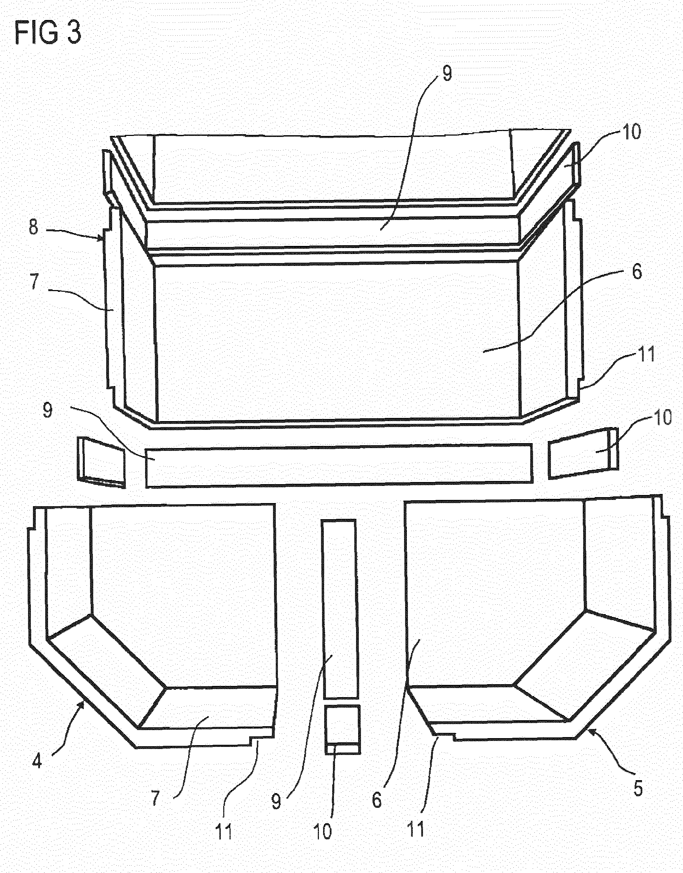

Die Figur 3 zeigt eine perspektivische Draufsicht auf eine Hälfte des Beckens 1 hier Fischzuchtbeckens gemäß Figur 2 vor dem Zusammenbau mit erfindungsgemäßen Detailpunkten bezüglich der Befestigung der einzelnen Beckenelemente 2 bis 5 und 8 aneinander. Hierzu sind Klebelaschen 9 und 10 vorgesehen, die in am Rande der einzelnen Segmente 2 bis 5 und 8 vorgesehene Aussparungen 11 eingelegt werden. Diese Aussparungen 11 sind wie auch die Klebelaschen 9 und 10 an den Klebeflächen durch spezielle Verfahren (Aufrauen) bereits in der Schalung vorbehandelt, so dass sie eine haltbarere Klebung ergeben.

Die unteren Klebelaschen 9 werden dabei von unten in die in den Böden 6 eingearbeiteten Aussparungen (nicht dargestellt) und die seitlichen Klebelaschen 10 in die Aussparungen 11 der Seitenwände 7 von den Ecksegmenten 2 bis 5 und den U-Segmenten 8 eingelegt und verklebt. Anstelle der hier gezeigten Anordnung der Klebelaschen 9 und 10 an der Außenwand des Beckens 1 hier des Fischzuchtbeckens können sie aber auch an der Innenwand und innen auf dem Boden 6 des Beckens 1 hier des Fischzuchtbeckens angeordnet sein, insbesondere wenn das Becken 1 hier das Fischzuchtbecken auf einem Boden z.B. in einer Halle aufgebaut werden soll.

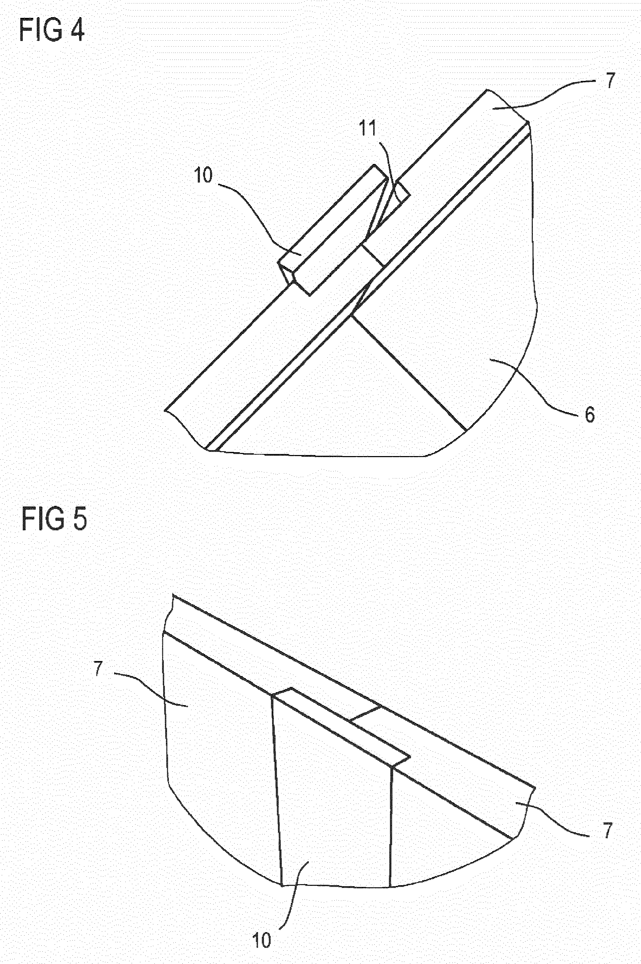

In der Figur 4 ist nun die Klebestelle in Vorbereitung der Klebung anhand einer Verbindung zweier Seitenwände 7 detailliert dargestellt. In ihren aneinander grenzenden Randbreichen, die miteinander verklebt werden sollen, sind in den Seitenwänden 7 Aussparungen 11 eingebracht, die zur Aufnahme der seitlichen Klebelaschen 10 vorgesehen sind. Die Klebeflächen der Aussparungen 11 sowie der Seiten der Seitenwände 7 sind z. B. durch das Abbinden verzögernde Medien bereits in der Schalung vorbehandelt, und durch anschließendes auswaschen oder ausbürsten angeraut, so dass sie eine sichere und haltbare Befestigung bewirken können. Durch die Klebelaschen 9 und 10 zusammen mit den Aussparungen 11 werden die Klebeflächen der einzelnen Segmente 2 bis 5 und 8 vergrößert, so dass insgesamt sich die Haltbarkeit und Dichtigkeit der Klebefläche erhöht.

Die Figur 5 zeigt nun die Klebestelle gemäß Figur 4 aus einer anderen Perspektive im fertig gestellten Zustand. Durch die Aussparungen 11 schließen die Klebelaschen 9 und 10 bündig mit den Flächen der Seitenwände 7 ab. In diesen Beispielen wurden die Aussparungen 11 und Klebelaschen 9 und 10 außen an dem Becken 1 hier dem Fischzuchtbecken angeordnet. Gemäß der Erfindung können sie aber auch auf der Innenseite vorgesehen sein.

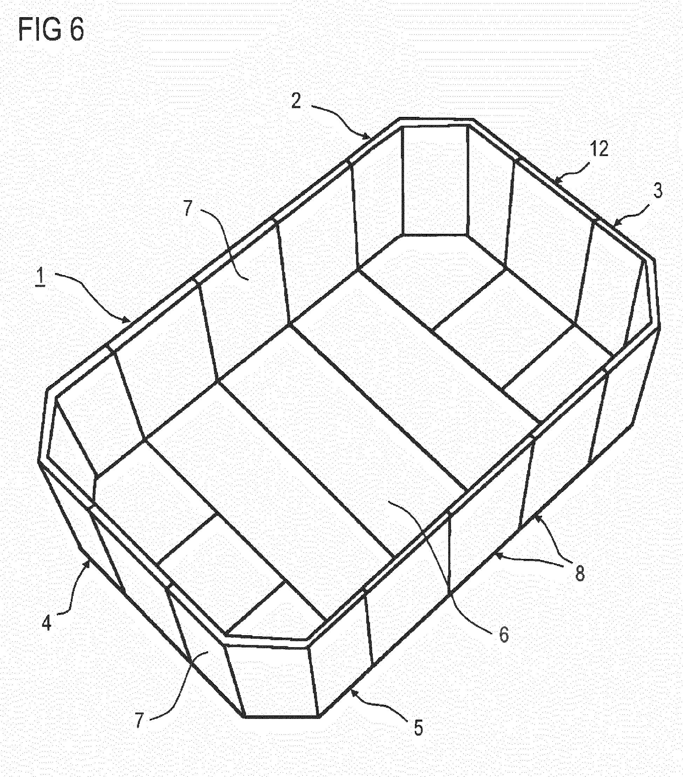

Die Figur 6 zeigt eine weitere Alternative für ein Becken1 hier ein Fischzuchtbecken, bei dem die Breite auch variabel ist. Dies wird dadurch erreicht, dass zu den Ecksegmenten 2 bis 5 und den U-Segmenten 8 als Verlängerungselemente gemäß Figur 2 noch beidseitig zwei L- Segmente 12 zwischen den Ecksegmenten 2 und 3 sowie 4 und 5 vorgesehen sind. Dazu müssen dann aber auch die drei U-Segmente 8 mit veränderter Breite verwendet werden.

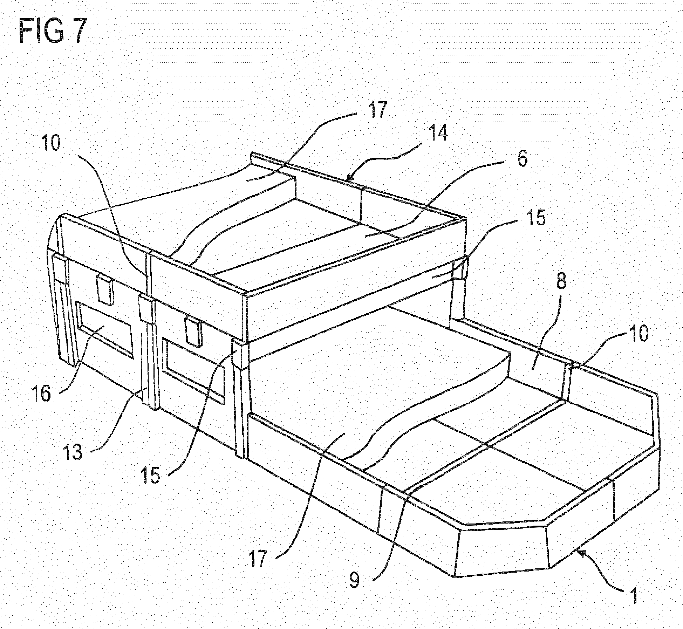

In der Figur 7 ist ein Becken 1 als Fischzuchtbecken etwas vereinfachter und abgeschnitten dargestellt, bei dem im hinteren Bereich die Seitenwände 7 der U-Segmente 8 höher ausgebildet sind. Die hinteren Seitenwände 7 sind seitlich mit Stützen 13 für ein zweites, oberes Becken 14, ebenfalls ein Fischzuchtbecken, versehen. Das obere Becken 14 wird von Trägern 15 gehalten, die von den Stützen 13 getragen werden und das untere Becken1 hier das Fischzuchtbecken überspannen. Die Träger 15 können gleichzeitig als Verklebe Hilfe ausgebildet sein und die Klebelaschen 9 ersetzen. Fensterartige Öffnungen 16 in den hinteren, höheren Seitenwänden 7 ermöglichen einen seitlichen Zugriff zu dem unteren Becken 1, dem unteren Fischzuchtbecken. In dieser perspektivischen Darstellung sind die Becken 1 und 14 andeutungsweise teils mit Wasser 17 gefüllt.

Während beim unteren Becken 1 die Klebelaschen 9 und 10 zweckmäßigerweise innen angebracht sind, können sie beim oberen Becken 14 außen vorgesehen sein. Im Bereich des Bodens des oberen Beckens 14 können z.B. T-förmige Träger 15 gleichzeitig die Klebelaschen ersetzen.

Durch die 3-dimensionalen Grundelemente mit Boden, um Fugenanteil zu minimieren, und weiteren einfachen Grundelementen ergeben sich vielfältige Kombinationsmöglichkeiten für verschieden große Becken 1. Die Verbindung der dünnwandigen Elemente aus UHPC-Beton erfolgt dabei mittels Kleber. Durch ein Aufrauen der Klebeflächen wird auch an den Verbindungsstellen eine hohe Festigkeit erreicht. Da der UHPC-Beton sehr dicht und widerstandsfähig mit hoher Druck und Biegezugfestigkeit ist, sind somit dünnwandige Elemente möglich. Da der UHPC-Beton selbstverdichtend ist, sind somit die erfindungsgemäßen komplexen 3-D-Formen mit sehr glatten Oberflächen möglich.

### Bezugszeichenliste

- 1: Becken
- 2 bis 5: Ecksegmente
- 6: Böden
- 7: Seitenwände
- 8: U-Segmente
- 9: untere Klebelaschen
- 10: seitliche Klebelaschen
- 11: Aussparungen
- 12: L-Segmente
- 13: Stützen
- 14: zweites, oberes Becken
- 15: Träger
- 16: fensterartige Öffnung
- 17: Wasser

## Patentansprüche

1. Flüssigkeitsdichtes, frei stehbares Becken (1) in Modulbauweise, vorzugsweise Fischzuchtbecken, bestehend aus mehreren aus Beton erstellten Segmenten (2 bis 5, 8, 12), die mittels Klebverbindungen aneinander befestigt sind,
**dadurch gekennzeichnet,**
**dass** das Becken (1) Eck-Segmente (2 bis 5) aufweist, die jeweils einen Boden (6) und mindestens zwei, einen Winkel zwischen sich einschließende Seitenwände (7) umfassen, wobei die Eck-Segmente (2 bis 5) an den diese miteinander verbindenden Rändern Klebeflächen aufweisen, und zudem im Bereich dieser Ränder mit Aussparungen (11) versehen sind, in die Klebelaschen (9, 10) eingelegt und mit den benachbarten Eck-Segmenten (2 bis 5) verklebt sind.

2. Becken (1) nach Anspruch 1,
**dadurch gekennzeichnet,**
**dass** zwischen den Eck-Segmenten (2 bis 5) ebenfalls Aussparungen aufweisende U-Segmente (8) und/oder L-Segmente (12) angeordnet und die Segmente (2 bis 5, 8, 12) miteinander verklebt sind.

3. Becken (1) nach Anspruch 1 oder 2,
**dadurch gekennzeichnet,**
**dass** die Segmente (2 bis 5, 8, 12) aus Hochleistungsbeton oder ultrahochfestem Beton mit oder ohne Faserbewehrung erstellt sind.

4. Becken (1) nach einem der Ansprüche 1 bis 3,
**dadurch gekennzeichnet,**
**dass** die Segmente (2 bis 5, 8, 12) dünnwandig in Stärken ab 30 mm ausgebildet sind.

5. Becken (1) nach einem der Ansprüche 1 bis 4,
**dadurch gekennzeichnet,**
**dass** der Grundriss des Beckens (1) polygonal, vorzugsweise oktogonal ausgebildet ist.

6. Becken (1) nach einem der Ansprüche 1 bis 5,
**dadurch gekennzeichnet,**
**dass** die Seitenwände (7') zumindest bereichsweise höher als die restlichen Seitenwände (7) ausgebildet sind, dass sich ein zweites, oberes Becken (14), vorzugsweise Fischzuchtbecken auf den höheren Seitenwänden (7') des Beckens (1) abstützt und dass mindestens eine der höheren Seitenwände (7') mit einer fensterartigen Öffnung (15) als Durch- oder Zugriff zu dem unteren Becken (1) versehen ist.

7. Becken (1) nach Anspruch 6,
**dadurch gekennzeichnet,**
**dass** die Seitenwände (7') Stützen (13) für die Segmente (2 bis 5, 8, 12) haltende Träger (15) aufweisen.

8. Becken (1) nach Anspruch 7,
**dadurch gekennzeichnet,**
**dass** zumindest Bereiche der Träger (15) die Klebelaschen (9, 10) ersetzen.

9. Becken (1) nach einem der Ansprüche 1 bis 8,
**dadurch gekennzeichnet,**
**dass** die Aussparungen (11) zur Aufnahme der Klebelaschen (9, 10) auf der Innenfläche und/oder Außenfläche der Segmente (2 bis 5, 8, 12) angeordnet sind.

10. Becken (1) nach einem der Ansprüche 1 bis 9,
**dadurch gekennzeichnet,**
**dass** die Klebeflächen in den Aussparungen (11) und/oder die Klebelaschen (9, 10, 15) eine aufgeraute Oberfläche aufweisen.

## Claims

1. A liquid-tight self-supportable basin (1) in modular design, preferably a fish breeding basin, composed of a plurality of segments (2 to 5, 8, 12) made of concrete which are fastened to one another by means of adhesive bonds,
**characterized in**
**that** the basin (1) has corner segments (2 to 5), each of which comprises a bottom (6) and at least two side walls (7) which enclose an angle between them, wherein the corner segments (2 to 5) have adhesive surfaces at the edges connecting the corner segments to one another and are also provided in the region of these edges with recesses (11) in which adhesive tabs (9, 10) are inserted and are adhesively bonded to the adjacent corner segments (2 to 5).

2. The basin (1) according to claim 1,
**characterized in**
**that** U-segments (8) and/or L-segments (12) which also have recesses are arranged between the corner segments (2 to 5) and that the segments (2 to 5, 8, 12) are adhesively bonded to one another.

3. The basin (1) according to claim 1 or 2,
**characterized in**
**that** the segments (2 to 5, 8, 12) are made of high performance concrete or ultra-high strength concrete with or without fiber reinforcement.

4. The basin (1) according to any one of claims 1 to 3,
**characterized in**
**that** the segments (2 to 5, 8, 12) are designed to be thin-walled with thicknesses starting from 30 mm.

5. The basin (1) according to any one of claims 1 to 4,
**characterized in**
**that** the floor plan of the basin (1) is designed to be polygonal, preferably octagonal.

6. The basin (1) according to any one of claims 1 to 5,
**characterized in**
**that** the side walls (7'), at least in certain regions, are designed to be higher than the remaining side walls (7), that a second upper basin (14), preferably a fish breeding basin, is supported on the higher side walls (7') of the basin and that at least one of the higher side walls (7') is provided with a window-like opening (15) as a passage or access to the lower basin (1).

7. The basin (1) according to claim 6,
**characterized in**
**that** the side walls (7') have pillars (13) for the beams (15) holding the segments (2 to 5, 8, 12).

8. The basin (1) according to claim 7,
**characterized in**
**that** at least regions of the beams (15) replace the adhesive tabs (9, 10).

9. The basin (1) according to any one of claims 1 to 8,
**characterized in**
**that** the recesses (11) are arranged on the inner surface and/or outer surface of the segments (2 to 5, 8, 12) for accommodating the adhesive tabs (9, 10).

10. The basin (1) according to any one of claims 1 to 9,
**characterized in**
**that** the adhesive surfaces in the recesses (11) and/or the adhesive tabs (9, 10, 15) have a roughened surface.

## Revendications

1. Bassin (1) étanche au liquide, à pose libre en construction modulaire, de préférence bassin de pisciculture, constitué de plusieurs segments (2 à 5, 8, 12) fabriqués en béton, qui sont fixés entre eux par des assemblages collés,
**caractérisé en ce**
**que** le bassin (1) comporte des segments d'angle (2 à 5) qui comprennent chacun un fond (6) et au moins deux parois latérales (7) incluant entre elles un angle, sur les bords qui les relient entre eux, les segments d'angle (2 à 5) comportant des surfaces de collage et étant par ailleurs munis dans la région desdits bords d'évidements (11) dans lesquels sont posées des pattes de collage (9, 10) et étant collés avec les segments d'angle (2 à 5) voisins.

2. Bassin (1) selon la revendication 1,
**caractérisé en ce**
**qu'**entre les segments d'angle (2 à 5) sont également placés des segments en forme de U (8) et/ou des segments en forme de L (12) comportant également des évidements et les segments (2 à 5, 8, 12) sont collés les uns avec les autres.

3. Bassin (1) selon la revendication 1 ou 2,
**caractérisé en ce**
**que** les segments (2 à 5, 8, 12) sont fabriqués en béton haute performance ou en béton ultra résistant, avec ou sans armature en fibres.

4. Bassin (1) selon l'une quelconque des revendications 1 à 3
**caractérisé en ce**
**que** les segments (2 à 5, 8, 12) sont conçus avec des parois minces, dans des épaisseurs à partir de 30 mm.

5. Bassin (1) selon l'une quelconque des revendications 1 à 4,
**caractérisé en ce**
**que** le tracé du bassin (1) est conçu sous forme polygonale, de préférence octogonale.

6. Bassin (1) selon l'une quelconque des revendications 1 à 5,
**caractérisé en ce**
**qu'**au moins par zones, les parois latérales (7') sont conçues en étant plus hautes que les parois latérales (7) restantes, en ce qu'un deuxième bassin (14) supérieur, de préférence un bassin de pisciculture s'appuie sur les parois latérales (7') plus élevées du bassin (1) et en ce qu'au moins l'une des parois latérales (7') plus élevées est munie d'une ouverture (15) de type fenêtre, pour un passage ou un accès au bassin (1) inférieur.

7. Bassin (1) selon la revendication 6,
**caractérisé en ce**
**que** les parois latérales (7') comportent des appuis (13) pour les supports (15) qui maintiennent des segments (2 à 5, 8, 12).

8. Bassin (1) selon la revendication 7,
**caractérisé en ce**
**qu'**au moins des zones des supports (15) remplacent les pattes de collage (9, 10).

9. Bassin (1) selon l'une quelconque des revendications 1 à 8,
**caractérisé en ce**
**que** les évidements (11) destinés à recevoir les pattes de collage (9, 10) sont placés sur la surface intérieure et/ou la surface extérieure des segments (2 à 5, 8, 12).

10. Bassin (1) selon l'une quelconque des revendications 1 à 9,
**caractérisé en ce**
**que** les surfaces de collage dans les évidements (11) et/ou les pattes de collage (9, 10, 15) présentent une surface rugueuse.
